# EUROPÄISCHE PATENTSCHRIFT

(11) **EP 2 494 224 B1**
(45) Veröffentlichungstag und Bekanntmachung des Hinweises auf die Patenterteilung: **09.04.2014**
(21) Anmeldenummer: 10779679.9
(22) Anmeldetag: 18.10.2010
(51) Int. Cl.: F16D 13/04, F16D 13/54

(54) **KUPPLUNG MIT VORKUPPLUNG UND HAUPTKUPPLUNG**
CLUTCH HAVING A PRE-CLUTCH AND A MAIN CLUTCH
EMBRAYAGE COMPRENANT UN PRÉ-EMBRAYAGE ET UN EMBRAYAGE PRINCIPAL

(30) Priorität: 29.10.2009 DE 102009051243; 21.12.2009 DE 102009059738; 29.06.2010 DE 102010025411
(43) Veröffentlichungstag der Anmeldung: 05.09.2012
(73) Patentinhaber: Schaeffler Technologies GmbH & Co. KG, 91074 Herzogenaurach (DE)
(72) Erfinder: CHAMBRION, Martin, 67850 Herrlisheim (FR); RABER, Christoph, 66564 Ottweiler-Steinbach (DE); SIMON, Yannick, 3853 Münchenbuchsee (CH)
(86) Internationale Anmeldenummer: PCT/DE2010/001224
(87) Internationale Veröffentlichungsnummer: WO 2011/050772

(56) Entgegenhaltungen:
- GB-A- 2 251 465
- JP-A- 2005 344 920
- US-A- 4 645 049
- US-A1- 2005 167 229

## Beschreibung

Die Erfindung betrifft eine Kupplung mit einer Vorkupplung und einer Hauptkupplung gemäß Patentanspruch 1.

Im Stand der Technik ist aus EP 1685332 B1 und GB 2 251 465 A eine Kupplung mit einer Vorkupplung und einer Hauptkupplung bekannt.

Die Aufgabe der Erfindung besteht darin, eine verbesserte Kupplung mit Vorkupplung und Hauptkupplung bereitzustellen.

Diese Aufgabe wird mit den Merkmalen des Anspruchs 1 gelöst.

Weitere vorteilhafte Ausführungsformen der Erfindung sind in den abhängigen Ansprüchen angegeben.

Ein Vorteil der Kupplung besteht darin, dass die Vorkupplung zwischen der Hauptkupplung und dem Betätigungselement der Vorkupplung angeordnet ist. Weiterhin ist das Spannmittel der Vorkupplung mit einem radial äußeren Bereich in Wirkverbindung mit einem Kupplungskern der Vorkupplung und das Spannmittel ist in radialen mittleren Bereich in Wirkverbindung mit einer Lamelle oder Gegenlamelle der Vorkupplung. In einem radial innen liegenden Bereich weist das Spannmittel einen Anlagebereich für das Betätigungselement auf. Durch diese Anordnung wird die Massenträgheit der Vorkupplung reduziert. Daher ist die Dynamik der Kupplung deutlich verbessert.

In einer Ausführungsform der Erfindung ist ein Kupplungskorb der Vorkupplung über ein Lager verdrehbar am Kupplungskern der Vorkupplung gelagert. In einer weiteren Ausführungsform ist ein Kupplungskern der Hauptkupplung über einen Drehmomentfühler, insbesondere über ein Federmittel mit dem Kupplungskern der Vorkupplung verbunden. In einer weiteren Ausführungsform ist ein Kupplungskern der Vorkupplung über ein zweites Lager an einem Kupplungskorb der Hauptkupplung gelagert. In einer weiteren Ausführungsform ist ein zweites Spannmittel vorgesehen, das die Lamelle und die Gegenlamelle der Vorkupplung gegeneinander verspannt.

In einer weiteren Ausführungsform sind dritte Spannmittel vorgesehen, die die Hauptkupplung in Schließrichtung vorspannen.

In einer weiteren Ausführungsform sind Mittel, insbesondere eine Zugfeder, eine Druckfeder, einen Druckgummi und/oder ein Dämpfer vorgesehen, die die Wirkverbindung zwischen der Hauptkupplung und der Vorkupplung verbessern. Insbesondere kann mit diesen Mitteln ein Schwingen oder Rupfen der Vorkupplung gedämpft werden. Dieser Aspekt ist unabhängig vom Aufbau der Kupplung und kann in verschiedenen Ausführungsformen eingesetzt werden.

In einer weiteren Ausführungsform weisen das erste und/oder das zweite Lager Mittel zum erzeugen einer Grundreibung auf, wobei die Mittel insbesondere in Form einer Reibscheibe und/oder in Form eines Federmittels zur Einstellung der Reibung des Lagers ausgebildet sind. Insbesondere kann damit ein Schwingen der Vorkupplung gedämpft werden. Dieser Aspekt ist unabhängig vom Aufbau der Kupplung und kann in verschiedenen Ausführungsformen eingesetzt werden.

In einer weiteren Ausführungsform ist die Hauptkupplung über einen Drehmomentfühler, insbesondere ein Federmittel, in Wirkverbindung mit der Vorkupplung.

Es zeigen
Figur 1 eine schematische Darstellung einer ersten Ausführungsform einer Kupplung,
Figur 2 Darstellungen von Steigungen von Rampenflächen einer Rampeneinrichtung,
Figur 3 einen perspektivischen Teilquerschnitt durch die Kupplung der Figur 1,
Figur 4 einen Querschnitt durch die Mitte der Kupplung der Figur 3,
Figur 5 eine schematische Darstellung einer zweiten Ausführungsform der Kupplung,
Figur 6 eine schematische Darstellung einer dritten Ausführungsform der Kupplung,
Figur 7 eine schematische Darstellung einer vierten Ausführungsform der Kupplung,
Figur 8 eine schematische Darstellung einer fünften Ausführungsform der Kupplung,
Figur 9 eine schematische Darstellung einer sechsten Ausführungsform der Kupplung,
Figur 10 eine schematische Darstellung einer siebten Ausführungsform der Kupplung, und
Figur 11 eine schematische Darstellung einer achten Ausführungsform der Kupplung.

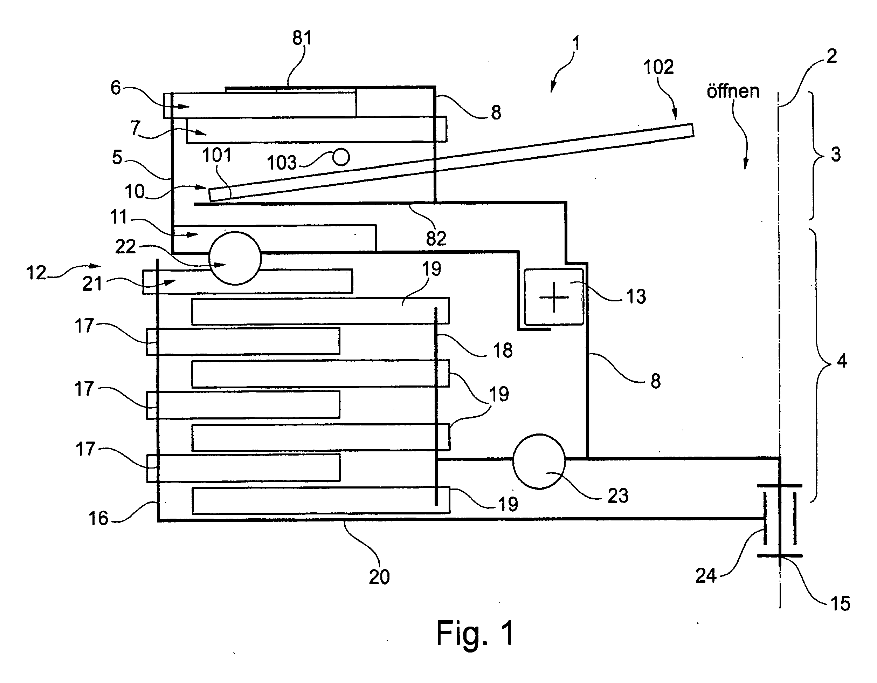

Figur 1 zeigt in einer schematischen Darstellung einen Teilschnitt einer Hälfte einer um eine Drehachse 2 angeordneten Kupplung 1 mit einer Vorkupplung 3 und einer Hauptkupplung 4. Die Kupplung 1 stellt eine Nasskupplung dar. Die Vorkupplung 3 und die Hauptkupplung 4 sind über ein Wirkverbindungsmittel 12 miteinander in Wirkverbindung. In einem ersten Kupplungskorb 5 der Vorkopplung 3 ist drehfest und axial entlang der Drehachse 2 begrenzt verlagerbar eine erste Lamelle 6 eingehängt, die beispielsweise aus mit Reibmaterial beschichteten Mitnehmer oder Reiblammelen gebildet sein kann. In dem dargestellten Ausführungsbeispiel ist nur eine erste Lamelle 6 dargestellt. Es können auch mehrere erste Lamellen 6 vorgesehen sein. Zudem ist jeder ersten Lamelle 6 eine erste Gegenlamelle 7 zugeordnet, wobei die ersten Gegenlamellen 7 in einem ersten Kupplungskern 8 der Vorkupplung 3 drehfest und axial entlang der Drehachse 2 verlagerbar aufgenommen sind. In dem dargestellten Ausführungsbeispiel ist der erste Kupplungskern 8 mit einer Getriebeeingangswelle 15 verbunden. Die erste Lamelle 6 stellt eine Mitnehmerscheibe und die erste. Gegenlamelle stellt eine Scheibe dar. Die ersten Gegenlamellen 7 sind beispielsweise aus Stahl hergestellt.

Der erste Kupplungskern 8 weist eine äußere und eine innere Platte 81, 82 auf, zwischen denen die erste Lamelle 6 und die erste Gegenlamelle 7 angeordnet sind. Weiterhin ist ein Spannmittel 10 beispielsweise in Form einer Tellerfeder angeordnet, das die erste Lamelle 6 und die erste Gegenlamelle 7 zusammendrückt und somit den ersten Kupplungskorb 5 mit dem ersten Kupplungskern 8 drehfest verbindet und damit die Vorkupplung 3 schließt. Der erste Kupplungskorb 5 ist über ein Lager 13 drehbar am ersten Kupplungskern 8 gelagert. Ist die Vorkupplung 3 geöffnet, so kann sich der erste Kupplungskorb 5 gegenüber dem ersten Kupplungskern 8 verdrehen.

Das Spannmittel 10 ist in einem radial äußeren Bereich 101 an der inneren Platte 82 abgestützt. In einem radial mittleren Bereich 103 liegt das erste Spannmittel 10 an einer Unterseite der ersten Gegenlamelle 7 an. In einem radial inneren Bereich weist das Spannmittel 10 einen weiteren Anlagebereich 102 für eine Wirkverbindung mit einem Betätigungselement auf.

Der erste Kupplungskorb 5 weist einen ersten Rampenring 11 auf, der einem zweiten Rampenring 21 der Hauptkupplung 4 zugeordnet ist. Der erste Rampenring 11 ist beispielsweise Teil eines Verbindungsstücks des ersten Kupplungskorbes 5, das zu dem Lager 13 geführt ist. Zwischen dem ersten Rampenring 11 und dem zweiten Rampenring 21 ist ein Übertragungselement 22 beispielsweise in Form einer Kugel ausgebildet. Der erste Rampenring 11, das Übertragungselement 22 und der zweite Rampenring 21 stellen das Wirkverbindungsmittel 12 zwischen der Vorkupplung 3 und der Hauptkupplung 4 dar.

Der zweite Rampenring 21 kann als Teil eines Deckels der Hauptkupplung 4 ausgebildet sein. Der zweite Rampenring 21 ist verdrehfest und axial entlang der Drehachse 2 begrenzt verlagerbar in einem zweiten Kupplungskorb 16 der Hauptkupplung 4 befestigt. Die Hauptkupplung 4 weist zweite Lamellen 17 auf, die drehfest und axial entlang der Drehachse 2 begrenzt verlagerbar in dem zweiten Kupplungskorb 16 eingehängt sind. Zudem weist die Hauptkupplung 4 einen zweiten Kupplungskern 18 auf, in den drehfest und axial entlang der Drehachse 2 begrenzt verlagerbar zweite Gegenlamellen 19 eingehängt sind. Die zweiten Lamellen 17 und die zweiten Gegenlamellen 19 sind wechselweise geschichtet angeordnet, wie in Figur 1 dargestellt ist. Der zweite Kupplungskern 18 ist über einen Drehmomentfühler 23 mit dem ersten Kupplungskern 8 verbunden. Der Drehmomentfühler 23 ist in Form einer Spiralfeder ausgebildet und stellt eine federnde Verbindung zwischen dem ersten und dem zweiten Kupplungskern 8, 18 dar. Die zweiten Lamellen 17 sind beispielsweise aus mit Reibmaterial beschichteten Mitnehmer- oder Reiblamellen gebildet. Die zweiten Gegenlamellen 19 sind beispielsweise aus Stahl hergestellt. Die zweiten Lamellen 17 und die zweiten Gegenlamellen 19 sind zwischen dem zweiten Rampenring 21 und einer zweiten Platte 20 angeordnet. Die zweite Platte 20 ist in dem dargestellten Ausführungsbeispiel ein Teil des zweiten Kupplungskorbes 18 und zu einem Motoreingangsanschluss 24 geführt.

Das erste Wirkverbindungsmittel 12 stellt eine Rampeneinrichtung in Form des ersten und des zweiten Rampenrings 11, 21 dar, wobei der erste und der zweite Rampenring 11, 21 auf zugewandten Seiten Steigungsflächen aufweisen. Zwischen den Steigungsflächen ist das Obertragungselement 22 angeordnet. Die Grundfunktion der Rampeneinrichtung besteht darin, dass abhängig von dem Verdrehwinkel zwischen dem ersten Rampenring 11 und dem zweiten Rampenring 21 der zweite Rampenring 21 mehr oder weniger weit in Richtung auf die zweite Platte 20 verschoben wird. Der Verschiebeweg ist in der Weise ausgebildet, dass abhängig von dem Verdrehwinkel die Hauptkupplung 4 geschlossen oder geöffnet ist.

Abhängig von der gewählten Ausführungsform kann das Übertragungselement 22 auch in Form von Zylinderrollen ausgebildet sein. Beispielsweise können drei oder mehr Kugeln oder Zylinderrollen vorgesehen sein, um die Verdrehung des ersten Rampenrings 11 gegenüber dem zweiten Rampenring 21 in eine axiale Bewegung des zweiten Rampenrings 21 in Richtung auf die zweite Platte 20 umzusetzen und damit die Hauptkupplung 4 zu schließen.

Wird das Spannmittel 10 nicht betätigt, so ist ein Reibschluss zwischen der ersten Lamelle 6 und der ersten Gegenlamelle 7 ausgebildet und damit die Vorkupplung 3 geschlossen. Ergibt sich nun aufgrund von Drehmomentunterschieden zwischen der Getriebeeingangswelle 15 und dem Motorausgang 24 und bei geschlossener Vorkupplung 3 eine Verdrehung zwischen dem ersten Rampenring 11 und dem zweiten Rampenring 21, so wird automatisch die Hauptkupplung 4 auf einen Reibschluss geschlossen. Bei gestarteter Brennkraftmaschine wird der zweite Kupplungskorb 16 und der zweite Rampenring 21 bei entgegengehaltenem Drehmoment auf der Getriebeeingangswelle 15 beispielsweise durch einen eingelegten Gang oder ein Schlupfmoment bei geschlossener Vorkupplung 3 gegenüber dem ersten Rampenring 11 verdreht. Dadurch wird das Übertragungselement 22 auf eine in Zugrichtung ansteigende Rampe abgewälzt, wobei der axial feststehende erste Rampenring 11 den axial verschiebbaren Rampenring 21 in Richtung auf die zweite Platte 20 axial verschiebt. Durch die axiale Bewegung des zweiten Rampenrings 21 werden die geschichtet angeordneten zweiten Lamellen 17 und zweiten Gegenlamellen 19 gegeneinander verspannt und in Reibeingriff gebracht. Dadurch wird die Hauptkupplung 7 in einen Reibschluss gebracht.

Zum Öffnen der Kupplung 1 muss lediglich die Vorkupplung 3 durch eine Betätigung des Spannmittels 10 in Richtung auf die Hauptkupplung 4 geöffnet werden. Die Vorkupplung 3 ist in der Weise ausgebildet, dass die Vorkupplung 3 geschlossen ist, wenn keine Betätigung des Spannmittels 10 erfolgt. Die Vorkupplung 3 ist eine sogenannte zugedrückte Kupplung, wobei sich das Spannmittel 10 auf den ersten Kupplungskern 8 abstützt. Dadurch wird die Massenträgheit der Vorkupplung 3 deutlich reduziert. Somit ist die Dynamik der Kupplung 1 deutlich verbessert. Abhängig von der gewählten Ausführungsform kann auf den Drehmomentfühler 23 auch verzichtet werden. Der Drehmomentfühler 23 sorgt dafür, dass Lastwechsel zwischen dem Motoranschluss 24 und der Getriebeeingangswelle 15 gedämpft werden.

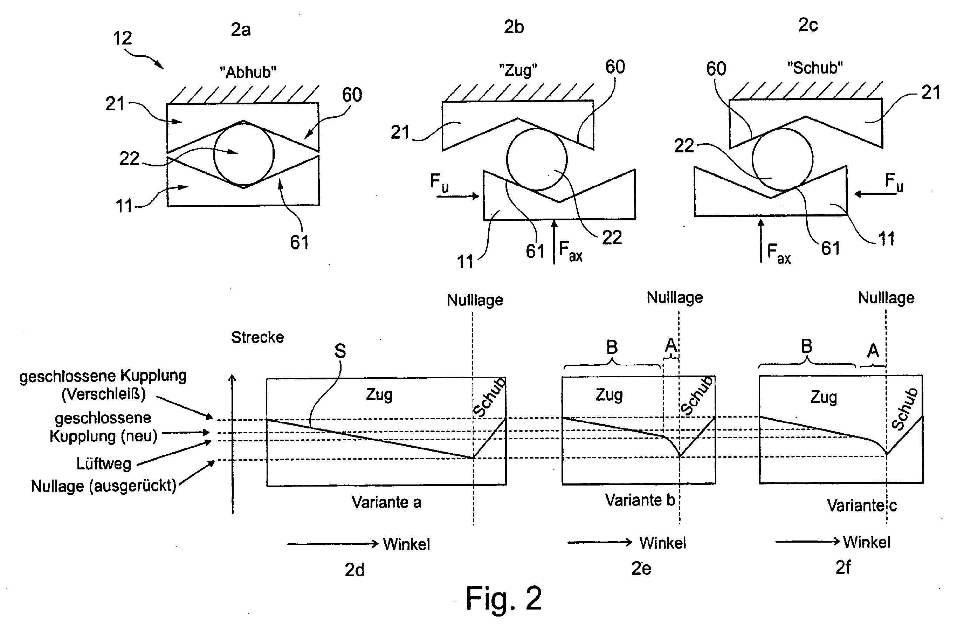

Die Figuren 2a, 2b und 2c zeigen in einer schematischen Darstellung drei Positionen des Wirkverbindungsmittels 12, das die Funktionsweise der Rampenringe erläutert. Die Figuren 2a, 2b und 2c zeigen jeweils einen Schnitt durch den ersten und den zweiten Rampenring 11, 21 und ein Übertragungselement 22 in Form einer Kugel. Die Querschnitte sind dabei entlang einer radialen Kreislinie in Bezug auf einen Kreismittelpunkt des ersten und des zweiten Rampenringes 11, 21 geführt. Der erste und der zweite Rampenring 11, 21 weisen jeweils eine Rampenfläche 60, 61 auf. In Figur 2a ist eine Ausgangsposition dargestellt, in der die Vorkupplung 3 geöffnet ist und keine Kraft von der Vorkupplung 3 auf die Hauptkupplung 4 übertragen wird. In Figur 2b ist eine Zugposition dargestellt, in der die Vorkupplung geschlossen ist und durch das aufgenommene Drehmoment der zweite Rampenring 21 verdreht gegenüber dem ersten Rampenring 11 ist. Da der erste Rampenring 11 in axialer Richtung eingespannt ist, wird durch die geneigten Rampenflächen 60; 61 eine Kraft auf den zweiten Rampenring 21 ausgeübt und der zweite Rampenring 21 in Richtung auf die zweite Platte 20 nach unten verschoben. Dadurch wird die Hauptkupplung 4 geschlossen.

In Figur 2c ist eine Schubsituation dargestellt, in der der erste Rampenring 11 gegenüber dem zweiten Rampenring 21 vorauseilt und der zweite Rampenring 21 nach unten in Richtung auf die zweite Platte gedrückt wird und damit die Hauptkupplung 4 wieder geschlossen wird. Abhängig von den gewählten Neigungen der Rampenflächen können festgelegte Schaltfunktionen zwischen der Vorkupplung 3 und der Hauptkupplung 4 festgelegt werden.

Die Figuren 2d, 2e und 2f zeigen drei Diagramme für drei verschiedene Rampenflächen, in denen der Verschiebeweg S des zweiten Rampenrings über den Verschiebewinkel W zwischen dem ersten und zweiten Rampenring 11, 21 aufgetragen ist. In den Diagrammen ist der resultierende Verschiebeweg aufgetragen, den der zweite Rampenring 21 in Richtung auf die zweite Platte 20 verschoben wird. Es können eine oder zwei Rampenflächen verwendet werden, um den Verschiebeweg zu realisieren. In der Variante a der Figur 2d ist die Zunahme des Verschiebeweges S im Schubfall deutlich steiler als im Zugfall. Die Zunahme des resultierenden Verschiebewegs ist auf beiden Seiten der Nulllage konstant. In der Variante b der Figur 2e steigt der Verschiebeweg in einem ersten Abschnitt A ausgehend von der Nulllage in Richtung Zug stark an und geht in einen zweiten Abschnitt B in eine geringerer Steigung über. In der Variante c der Figur 2f ist der Übergang von dem ersten steileren Abschnitt in den zweiten flacheren Abschnitt auf der Seite des Zugfalls abgerundet ausgeführt. Durch die unterschiedliche Zunahme der Verschiebewege im Zugfall oder im Schubfall kann eine Verbesserung der Kupplungsfunktion erreicht werden. Die Auslegung der Rampenflächen kann auf die zwei wesentlichen Betriebszustände der Kupplung abgestimmt werden. Der eine Zustand besteht darin, dass der Motor ein positives Drehmoment liefert, z. B. wenn der Fahrer Gas gibt und dadurch die Kupplung 1 auf Zug belastet ist. Wenn der Motor ein negatives Moment liefert, z. B. bei einem Motorbremsen, wird die Kupplung auf Schub belastet. So verdreht sich die Vorkupplung relativ zur Hauptkupplung abhängig vom Zugbetrieb oder vom Schubbetrieb in die eine oder andere Richtung ausgehend von der Nulllage. Idealerweise sollte im Zugbetrieb ein maximales Motormoment übertragen werden können. Im Schubbetrieb ist hingegen ein kleineres begrenztes Motormoment erforderlich. Beispielsweise beim Einsatz der Kupplung in einem Motorrad kann nämlich im Schubbetrieb das Hinterrad des Motorrads leichter blockieren. Während bei einer Beschleunigung (Zugbelastung) das Hinterrad im Wesentlichen das Motorradgewicht übernimmt, übernimmt bei einem Bremsvorgang mit einer Motorbremsung und damit einer Schubbelastung das Vorderrad das Motorradgewicht. Dies bedeutet, dass die Rutschgrenze des Hinterrads im Schubbetrieb schneller erreicht wird als im Zugbebetrieb. Beispielsweise bei einem Herunterschalten von einem höheren übersetzten Gang zu einem niedrigeren übersetzten Gang liefert der Motor kurzzeitig ein hohes negatives Moment, das zu einem Blockieren des Hinterrads führen könnte. Aufgrund dieser Situation ist eine geringe Steigung der effektiven Rampenfläche oder Rampenflächen im Zugbetrieb vorteilhaft, um ein maximales Drehmoment des Motors übertragen zu können. Ein Durchrutschen des Hinterrads beim Herunterschalten kann beispielsweise dadurch vermieden werden, dass ein geringes übertragbares Moment im Schubbetrieb entsteht. Die Anpresskraft sollte reduziert werden, was durch eine hohe Steigung erzeugt werden kann.

Die Form der Rampenflächen, d. h. die Zunahme des Verschiebewegs S ausgehend von der Nulllage in Abhängigkeit vom Verdrehwinkel beeinflusst auch die Dynamikempfindlichkeit der Kupplung, insofern als die Zunahme des Verschiebeweges die Eigenfrequenz der Vorkupplung verschieben kann. Je steiler die Zunahme des Verschiebeweges, d. h. je steiler die Steigung der Rampenflächen ist, desto höher liegt die Eigenfrequenz. Dies ist günstiger für die Dynamik aber ungünstiger für die Momentübertragung. Somit ist es vorteilhaft, die Form der Rampenflächen in der Weise auszuführen, dass die Steigung des Verschiebewegs mit der Zunahme des Verdrehwinkels zweistufig ausgelegt ist, wie in Figur 2 dargestellt ist. Die effektive Zugrampe darf nämlich in dem Luftwegebereich steiler sein, weil die Hauptkupplung noch nicht geschlossen ist und kein Drehmoment überträgt. Daraus folgt, dass ein abgerundeter Übergang zwischen den zwei Abschnitten A, B gewählt werden kann, wie in Figur 2f dargestellt ist. Der abgerundete Übergang zwischen den zwei unterschiedlich steil ausgebildeten Abschnitten A, D weist den Vorteil auf, dass das Abheben der Übertragungsmittel von den oder der Rampenfläche vermieden werden kann.

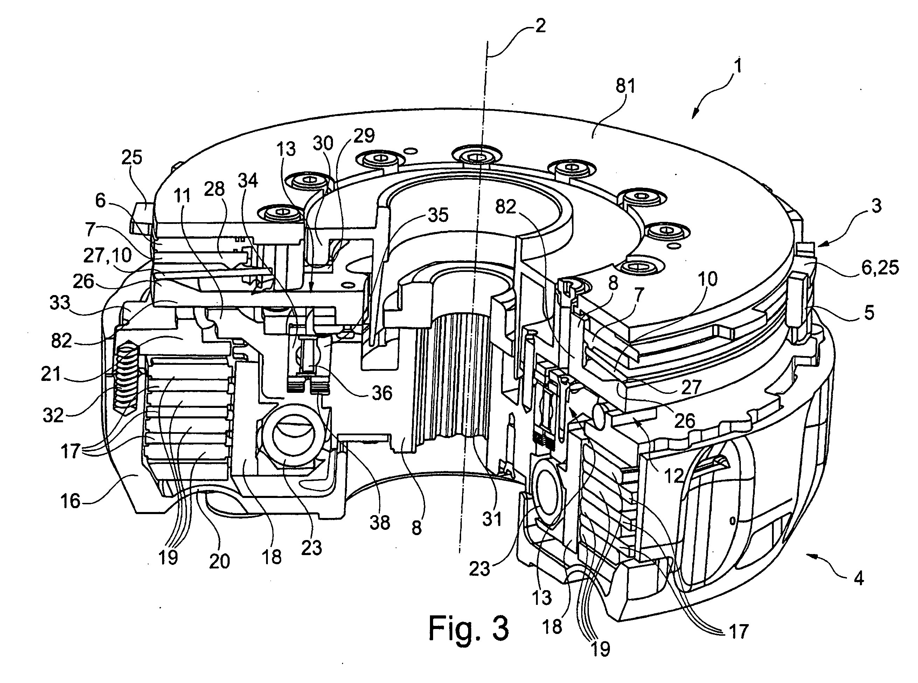

Figur 3 zeigt einen Teilquerschnitt in perspektivischer Darstellung durch die Kupplung 1. Im oberen Bereich ist die Vorkupplung 3 angeordnet, die über das Wirkverbindungsmittel 12 mit der im unteren Bereich angeordneten Hauptkupplung 4 in Wirkverbindung steht. Die äußere Platte 81 ist fest mit der inneren Platte 82 verschraubt. An einer Innenseite der äußeren Platte 81 liegt die erste Lamelle 6 an, die über Laschen 25 in einer Ausnehmung des ersten Kupplungskorbes 5 gegen eine Verdrehung gegenüber dem Kupplungskorb 5 befestigt ist, wobei jedoch eine axiale Verschiebung entlang der Drehachse 2 möglich ist. Unter der ersten Lamelle 6 ist die erste Gegenlamelle 7 angeordnet, die drehfest in den ersten Kupplungskern 8 eingehängt ist. Die erste Gegenlamelle 7 ist ebenfalls in axialer Richtung parallel zur Drehachse 2 verschiebbar in dem ersten Kupplungskern 8 gelagert. Auf einer Unterseite der Gegenlamelle 7 ist das Spannmittel 10 in Form einer Tellerfeder angeordnet. Sowohl die erste Lamelle 6 als auch die erste Gegenlamelle 7 und auch das Spannmittel 10 können die Grundform einer Kreisscheibe aufweisen. Ebenso weist die innere Platte 82 die Grundform einer Kreisscheibe auf, wobei die innere Platte 82 im radial äußeren Randbereich einen auf einer Oberseite in Richtung auf die äußere Platte 81 herausragenden ringförmigen Wulst 26 aufweist. Das Spannmittel 10 liegt mit einem radial äußeren ersten Randbereich 27 auf dem Wulst 26 auf. Weiterhin weist die erste Gegenlamelle 7 auf einer Unterseite, die dem Spannmittel 10 zugewandt ist, in einem radial mittleren Bereich eine zweite, ringförmig umlaufende Wulst 28 auf. In der dargestellten Position übt das Spannmittel 10 über eine Anlage an der zweiten Wulst 28 eine Kraft auf die erste Gegenlamelle 7 auf, sodass die erste Gegenlamelle 7 die erste Lamelle 6 gegen die äußere Platte 81 drückt und damit ein Reibschluss zwischen der ersten Lamelle 6 und der ersten Gegenlamelle 7 hergestellt ist und die Vorkupplung 3 geschlossen ist. Das Spannmittel 10 weist in einem radial innen liegenden Bereich eine Auflagefläche 29 für ein Betätigungsmittel 30 auf. Das Betätigungsmittel 30 ist in Form einer Ringhülse ausgebildet und steht mit einem nicht dargestellten Betätigungselement in Form eines Ausrückers in Verbindung. Soll die Vorkupplung 3 geöffnet werden, so wird das Betätigungsmittel 30 von dem Betätigungselement nach unten in Richtung auf die Hauptkupplung 4 gedrückt. Dadurch wird die Tellerfeder 10 in Richtung auf die innere Platte 82 bewegt, sodass die Vorspannung auf die erste Gegenlamelle 7 gelöst wird. Damit wird der Reibschluss zwischen der ersten Lamelle 6 und der ersten Gegenlamelle 7 geöffnet.

Die innere Platte 82 ist mit dem ersten Kupplungskern 8 verbunden. Der erste Kupplungskern 8 weist eine Nabe 31 zum Anschluss einer Getriebeeingangswelle auf. Der erste Kupplungskorb 5 ist mit dem ersten Rampenring 11 verbunden, wobei der Rampenring 11 unterhalb der inneren Platte 82 angeordnet ist. Dem ersten Rampenring 11 ist der zweite Rampenring 21 zugeordnet, der teilweise unterhalb des ersten Rampenrings 11 angeordnet ist. Der zweite Rampenring 21 wird über eine Vorspannfeder 32, die gegenüber dem zweiten Kupplungskorb 16 abgestützt ist, in Richtung auf den ersten Rampenring 11 vorgespannt. Es sind mehrere Vorspannfedern 32 vorgesehen, wobei nur eine dargestellt ist. Der zweite Rampenring 21 stellt gleichzeitig einen Deckel der Hauptkupplung 4 dar. Der zweite Rampenring 21 ist über zweite Laschen 33 in Ausnehmungen des zweiten Kupplungskorbes 16 in axialer Richtung entlang der Drehachse 2 verschiebbar, aber in radialer Richtung drehfest mit dem zweiten Kupplungskorb 16 verbunden. Weiterhin sind vier zweite Lamellen 17 drehfest, aber axial entlang der Drehachse 2 verschiebbar im zweiten Kupplungskorb 16 gehaltert. Der zweite Kupplungskorb 16 steht mit der zweiten Platte 20 in Verbindung, wobei die zweite Platte 20 mit einer Motorwelle verbindbar ist. Die Kupplung 4 weist zudem die zweiten Gegenlamellen 19 auf, die mit dem zweiten Kupplungskern 18 drehfest, aber in axialer Richtung der Drehachse 2 verschiebbar gehaltert sind. Der zweite Kupplungskern 18 ist über mehrere Drehmomentfühler 23, die in Form von Spiralfedern ausgebildet sind, mit dem ersten Kupplungskern 8 gekoppelt. Die Drehmomentfühler 23 sorgen dafür, dass eine federnde Verbindung zwischen dem ersten Kupplungskern 8 und dem zweiten Kupplungskern 18 über die Spiralfedern 11 gegeben ist.

Der erste Rampenring 11 ist über das Lager 13 drehbar um die Drehachse 2 am ersten Kupplungskern 8 abgestützt. Das Lager 13 weist eine äußere Lagerschale 34, eine innere Lagerschale 35 und dazwischen angeordnete Lagerwalzen 36 auf. Die äußere Lagerschale 34 liegt an dem ersten Rampenring 11 an. Die innere Lagerschale 35 liegt an dem ersten Kupplungskern 8 an. Die äußere und die innere Lagerschale 34, 35 rollen über die Lagerwalzen 36 gegeneinander ab.

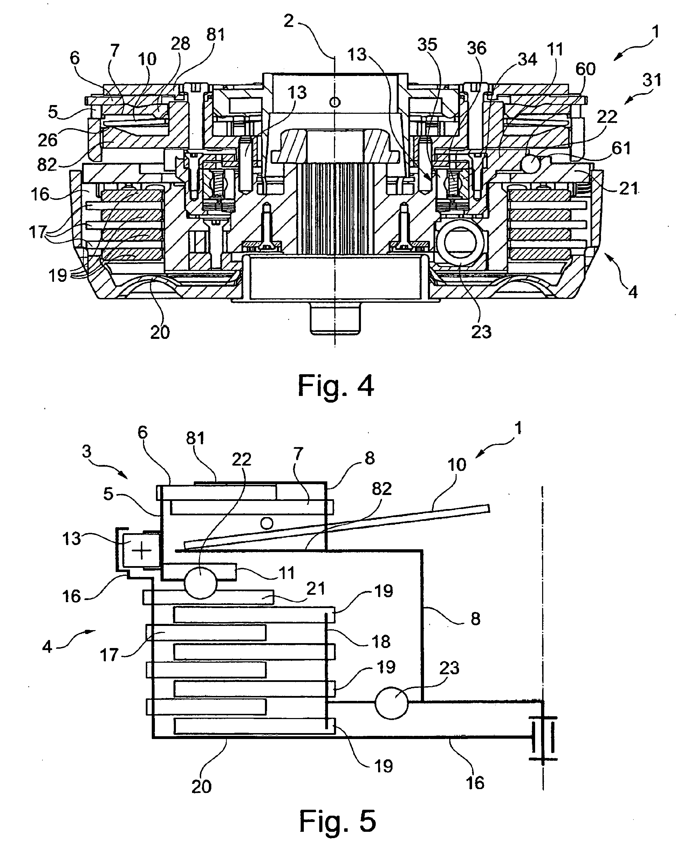

Figur 4 zeigt die Kupplung 1 in einem weiteren Querschnitt durch die Drehachse 2 und die Mitte der Kupplung 1.

Figur 5 zeigt in einer schematischen Darstellung eine weitere Ausführungsform der Kupplung 1, die im Wesentlichen wie in den Figuren 1 bis 3 aufgebaut ist. Entgegen der Ausführungsform der Figuren 1 bis 3 ist in dieser Ausbildung das Lager 13 zwischen dem ersten Kupplungskorb 3 und dem zweiten Kupplungskorb 16 angeordnet. Abhängig von der gewählten Ausführungsform kann das Lager 13 auch Mittel für die Grundreibung gemäß den Figuren 3 und 4 aufweisen.

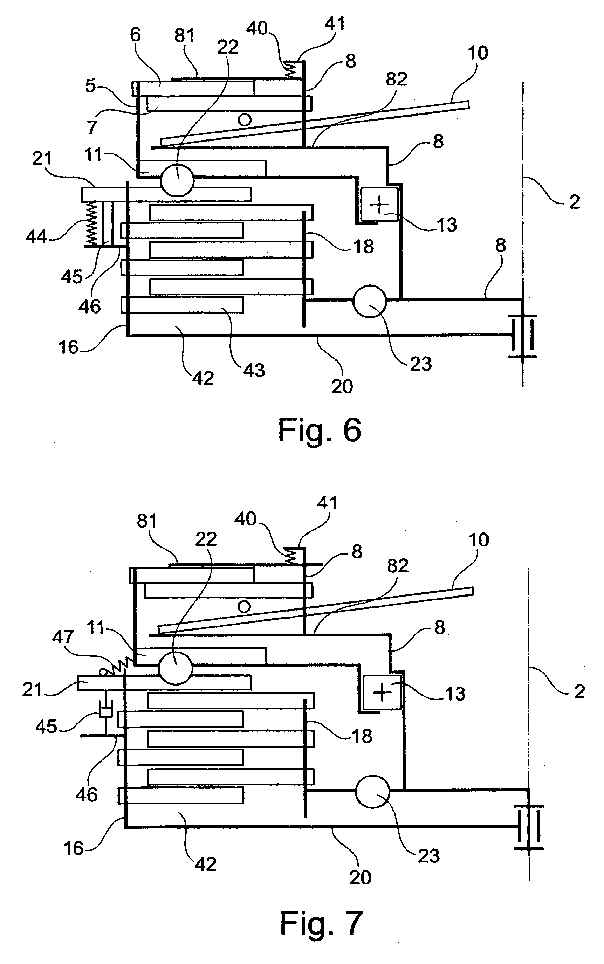

Figur 6 zeigt eine weitere Ausführungsform gemäß Figur 1, wobei zusätzlich eine Vorspannfeder 40 vorgesehen ist und die äußere Platte 81 in axialer Richtung parallel zur Drehachse 2 beweglich mit Hilfe der Vorspannfeder 40 gegenüber einem Anschlag 41 des ersten Kupplungskerns 8 in Richtung auf die erste Lamelle 6 vorgespannt ist. Auf diese Weise wird eine Belagfederung bei der Vorkupplung 3 bereitgestellt. Damit wird die Anfahrbarkeit der Kupplung 1 verbessert.

Zudem ist eine zweite Vorspannfeder 42 vorgesehen, die zwischen der zweiten Platte 20 und der untersten zweiten Lamelle 43 eingespannt ist. Auf diese Weise wird eine Belagfederung bei der Hauptkupplung 4 bereitgestellt. In einer weiteren Ausführungsform können zusätzliche Feder- und/oder Dämpfungsmittel 44, 45 vorgesehen sein, um den zweiten Rampenring 21 mit einer definierten Zug- und/oder Druckspannung oder Dämpfung zu versehen. In dem dargestellten Ausführungsbeispiel ist ein Federmittel 44 und ein Dämpfungsmittel 45 zwischen einem zweiten Anschlag 46 des zweiten Kupplungskorbes 16 und dem zweiten Rampenring 21 angeordnet. Das Dämpfungsmittel kann beispielsweise in Form eines Gummielementes oder eines Dämpfungskolbens ausgebildet sein.

In einer weiteren Ausführungsform, die im Wesentlichen der Ausführung der Figur 6 entspricht, und die in Figur 7 dargestellt ist, ist zwischen dem zweiten Rampenring 21 und dem zweiten Anschlag 46 ein Dämpfungsmittel 45 angeordnet. Weiterhin ist ein zweites Federmittel 47 zwischen dem ersten Rampenring 11 und dem zweiten Rampenring 21 eingespannt. Das zweite Federmittel 47 ist beispielsweise in Form einer Zugfeder ausgebildet. Abhängig von der gewählten Ausführungsform könnte das Federmittel 47 auch in Form einer Druckfeder ausgebildet sein. Auf diese Weise wird eine Vorspannung zwischen dem ersten und dem zweiten Rampenring 11, 21 ermöglicht.

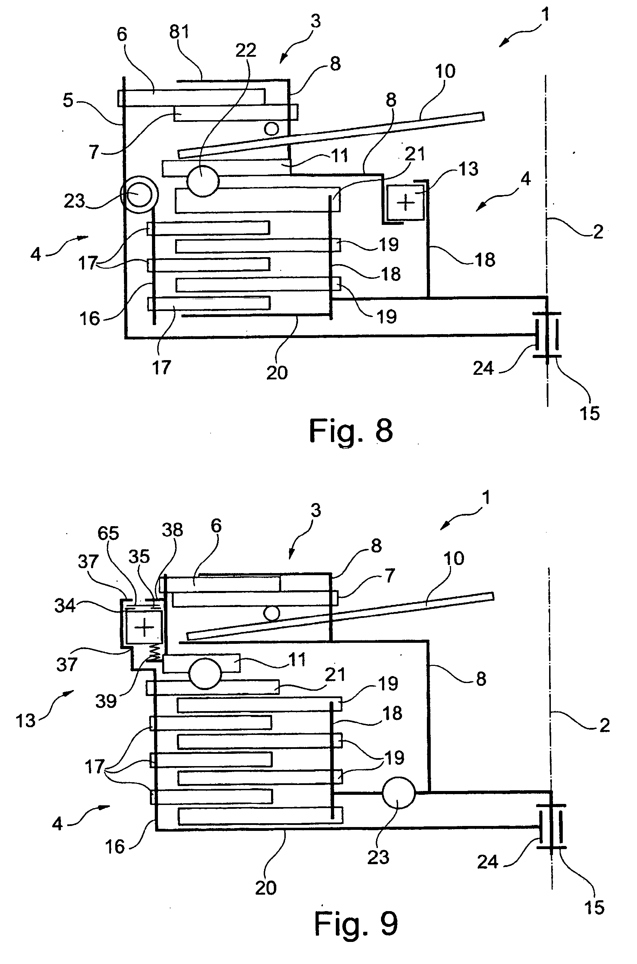

Figur 8 zeigt eine weitere Ausführungsform der Kupplung 1, die im Wesentlichen der Ausführungsform der Figur 1 entspricht, wobei jedoch der Drehmomentfühler 23 zwischen dem ersten Kupplungskorb 5 und dem zweiten Kupplungskorb 16 angeordnet ist. Zudem ist der erste Kupplungskorb 5 mit dem Motoranschluss 24 verbunden. Weiterhin ist der zweite Kupplungskern 18 mit der Getriebeeingangswelle 15 verbunden. Die zweite Platte 20 steht mit dem zweiten Kupplungskern 18 in Verbindung. Der erste Kupplungskern 8 ist über ein Lager 13 drehbar am zweiten Kupplungskern 18 abgestützt. Der zweite Rampenring 21 ist am zweiten Kupplungskern 18 befestigt. Der erste Rampenring 11 ist am ersten Kupplungskern 8 befestigt. Das Spannmittel 10 ist am ersten Rampenring 11 abgestützt. Abhängig von der gewählten Ausführungsform kann auch der erste Kupplungskorb 5 mit einer Getriebeeingangswelle und der zweite Kupplungskern 18 mit einer Motorwelle gekoppelt sein. Das Lager 13 kann mit oder ohne Mittel zur variablen Einstellung einer Grundreibung ausgebildet sein.

Figur 9 zeigt die Ausführungsform der Figur 5 mit einer schematischen Darstellung des Lagers 13 mit Mitteln für eine Grundreibung. Die Grundreibung im Lager 13 kann beispielsweise durch eine Reibscheibe 65 erreicht werden, die zwischen den Lagerschalen 34, 35 und den Anlageflächen 37, 38 eingelegt ist. Zudem ist das Spannmittel 39 vorgesehen, das zwischen die Anlageflächen 37, 38, die an dem ersten und zweiten Kupplungskorb 5, 16 ausgebildet sind, und den Lagerschalen 34, 35 eingespannt ist. Das Ziel der Grundreibung besteht darin, die relative rotatorische Bewegung zwischen der Außenlagerschale 34 und der Innenlagerschale 35 des Lagers 13 zu bremsen. So kann die rotatorische Schwingung der Vorkupplung 3 gegenüber dem Motor gedämpft werden. Dies wird durch die Vorspannung der Lagerschalen mit Hilfe des Spannmittels 39 erreicht. Die Vorspannung durch das Spannmittel 39 wirkt auch beidseits auf die Reibscheibe, so dass ein Reibmoment zwischen der Vorkupplung 3 und dem Motor erzeugt wird, wobei sowohl die äußere Lagerschale als auch die innere Lagerschale an der Reibscheibe schleifen. Damit wird die Verdrehung zwischen Vorkupplung und Hauptkupplung gebremst. In dem Fall, in dem die Hauptkupplung 4 ein Moment überträgt, entsteht eine Anpresskraft auf das Lager 13, so dass das Reibmoment im Lager 13 moduliert wird. Die Anpresskraft wirkt auch auf die Vorkupplung, so dass das Spannmittel 39 gespannt wird. Diese zusätzliche Kraft entlastet die Vorspannung der inneren Lagerschale 35, so dass das Reibmoment auf der inneren Lagerschale 35 wenigstens reduziert oder vollständig aufgehoben wird. Somit ist das Grundreibungssystem des Lagers 13 durch die Anpresskraft der Hauptkupplung beeinflussbar. Solange die Anpresskraft der Hauptkupplung 4 größer ist als die Anpresskraft des Spannmittels 39, ist die Grundreibung ausgeschaltet. Wenn hingegen die Anpresskraft der Hauptkupplung gering ist, wie z. B. beim Einkuppeln, dann ist die Rotation des Lagers gebremst.

Während einer Synchronisierungsphase der Kupplung 1, d. h. wenn das Getriebe progressiv mit dem Motor verbunden ist, kann die Vorkupplung 3 zu Schwingungen angeregt werden, so dass ein Rupfen der Kupplung auftritt. Während dieser Phase wird die Anpresskraft der Hauptkupplung 4 immer größer. Da das Grundreibungssystem des Lagers 13 abhängig von der Anpresskraft der Hauptkupplung 4 ist, wird die Vorkupplung umso mehr gebremst, je geringer die Anpresskraft ist. Somit kann das Rupfen der Kupplung reduziert werden.

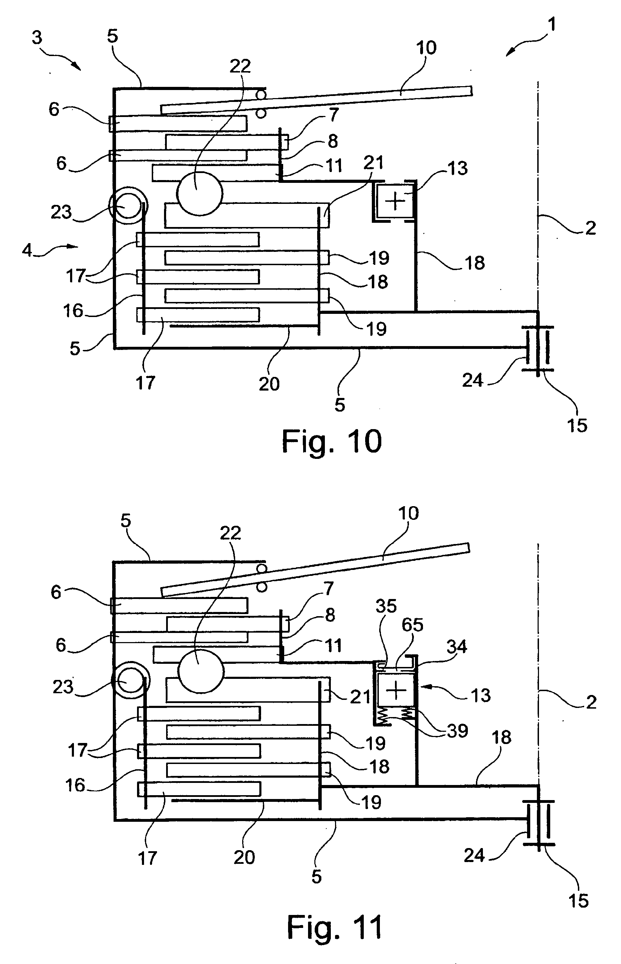

Figur 10 zeigt eine weitere Ausführungsform der Figur 8, wobei die Vorkupplung als gedrückte Kupplung ausgebildet ist. In dieser Ausführungsform ist das Spannmittel 10 in der Weise angeordnet, dass sich das Spannmittel auf dem ersten Kupplungskorb 5 abstützt. In dieser Ausführungsform ist der erste Kupplungskern 8 mit einem Motorausgang verbunden. Der zweite Kupplungskern 18 steht mit einem Eingang eines Getriebes in Verbindung. In dieser Ausführungsform ist die Vorkupplung 3 nur dann mit dem Motor verbunden, wenn die Vorkupplung geschlossen ist. Wird das Kupplungspedal betätigt, hat die Beschleunigung des Motors keinen Einfluss auf die Vorkupplung. Der erste Rampenring 11 bleibt im Stillstand.

Figur 11 zeigt eine weitere Ausführung der Kupplung der Figur 10, wobei das Lager 13 eine Reibscheibe 65 und Spannmittel 39 aufweist, die eine Grundreibung gemäß der Funktion wie bei Figur 9 beschrieben einstellen. Damit kann die Schwingungsresonanz der Vorkupplung 3 reduziert werden. Die Spannmittel 39 und die Reibscheibe sind in der Weise mit der äußeren und/oder inneren Lagerschale 34, 35 in Wirkverbindung, dass die Grundreibung auf das Lager 13 von der Anpresskraft der Hauptkupplung 4 abhängt. Ist die Anpresskraft der Hauptkupplung 4 geringer als die Anpresskraft des Spannmittels 39, dann ist die Grundreibung gegeben und die Rotation des Lagers 13 ist gebremst. Ist die Anpresskraft der Hauptkupplung 4 größer als die Anpresskraft des Spannmittels 39, dann ist die Grundreibung ausgeschaltet.

### Bezugszeichenliste

- 1: Kupplung
- 2: Drehachse
- 3: Vorkupplung
- 4: Hauptkupplung
- 5: erster Kupplungskorb
- 6: Lamelle
- 7: Gegenlamelle
- 8: erster Kupplungskern
- 10: Spannmittel
- 11: erster Rampenring
- 12: Wirkverbindungsmittel
- 13: Lager
- 15: Getriebeeingangswelle
- 16: zweiter Kupplungskorb
- 17: zweite Lamellen
- 18: zweiter Kupplungskern
- 19: zweite Gegenlamellen
- 20: zweite Platte
- 21: zweiter Rampenring
- 22: Übertragungselement
- 23: Drehmomentfühler
- 24: Motoranschluss
- 25: Lasche
- 26: Wulst
- 27: erster Randbereich
- 28: zweiter Wulst
- 29: Auflagefläche
- 30: Betätigungsmittel
- 31: Nabe
- 32: Vorspannfeder
- 33: zweite Lasche
- 34: äußere Lagerschale
- 35: innere Lagerschale
- 36: Lagerwalze
- 37: erste Anlagefläche
- 38: zweite Anlagefläche
- 39: Spannmittel
- 40: Vorspannfeder
- 41: Anschlag
- 42: zweite Vorspannfeder
- 43: unterste zweite Lamelle
- 44: Federmittel
- 45: Dämpfungsmittel
- 46: zweiter Anschlag

- 60: Rampenfläche
- 61: Rampenfläche
- 65: Reibmittel

- 81: äußere Platte
- 82: innere Platte
- 102: weiterer Anlagebereich

- 101: äußerer Bereich
- 103: mittlerer Bereich

## Patentansprüche

1. Kupplung (1) mit einer Vorkupplung (3) und mit einer Hauptkupplung (4), wobei die Vorkupplung (3)
- über ein Spannmittel (10) in einen geschlossenen oder einen offenen Zustand bringbar ist;
- über eine Wirkverbindung (12) mit der Hauptkupplung (4) in der Weise verbunden ist, dass die Offenposition und die Schließposition auf die Hauptkupplung (4) übertragen wird, wobei das Spannmittel (10)
- in einem mittleren Bereich in Wirkverbindung mit einer Lamelle (6) der Gegenlamelle (7) der Vorkupplung (3) steht;
- in einem innen liegenden Bereich einen Anlagebereich (102) für das Betätigungselement aufweist;
**dadurch gekennzeichnet, dass** das Spannmittel (10) mit einem äußeren Bereich in Wirkverbindung mit einem mit einer Getriebeeingangswelle verbindbaren Kupplungskern (8) der Vorkupplung (3) steht.

2. Kupplung nach Anspruch 1, **dadurch gekennzeichnet, dass** ein Kupplungskorb (5) der Vorkupplung (3) über ein Lager (13) drehbar am Kupplungskern (8) der Vorkupplung (3) gelagert ist.

3. Kupplung nach einem der Ansprüche 1 oder 2, **dadurch gekennzeichnet, dass** die Hauptkupplung (4) über einen Drehmomentfühler (23), insbesondere über ein Federmittel mit der Vorkupplung (3) in Wirkverbindung steht.

4. Kupplung nach Anspruch 1, **dadurch gekennzeichnet, dass** ein Kupplungskorb (5) der Vorkupplung (3) über ein Lager (13) drehbar an einem Kupplungskorb (16) der Hauptkupplung (4) gelagert ist.

5. Kupplung nach einem der Ansprüche 1 bis 4, **dadurch gekennzeichnet, dass** die Vorkupplung (3) eine Lamelle (6) aufweist, die in einem Kupplungskorb (5) der Vorkupplung (3) eingehängt ist, dass die Vorkupplung (3) eine Gegenlamelle (7) aufweist, die in einen Kupplungskern (8) der Vorkupplung (3) eingehängt ist, und dass eine Vorspannfeder (40) vorgesehen ist, die die Lamelle (6) und die Gegenlamelle (7) in Richtung auf das Spannmittel (10) vorspannt.

6. Kupplung nach einem der Ansprüche 1 bis 5, **dadurch gekennzeichnet, dass** die Hauptkupplung (4) eine Lamelle (17) und eine Gegenlamelle (18) aufweist, die von einem Deckel (21) in Reibschluss bringbar sind, und dass eine zweite Vorspannfeder (42) vorgesehen ist, die die Lamelle (17) und die Gegenlamelle (18) in Richtung auf den Deckel (21) vorspannt.

7. Kupplung nach einem der Ansprüche 1 bis 6, **dadurch gekennzeichnet, dass** die Wirkverbindung zwischen der Vorkupplung (3) und der Hauptkupplung (4) in Form eines Rampenrings (11) der Vorkupplung (3) vorgesehen ist, der über ein Übertragungselement (22) mit einem Rampenring (21) der Hauptkupplung (4) in Wirkverbindung steht, sodass eine Verdrehung der Hauptkupplung (4) gegenüber der Vorkupplung (3) in eine axiale Verschiebung des Rampenrings (21) der Hauptkupplung (4) umgesetzt wird, dass Mittel (32, 44, 45, 39, 65) vorgesehen sind, die die Wirkverbindung zwischen dem Rampenring (21) der Hauptkupplung (4) und dem Rampenring (11) der Vorkupplung (3) verbessern, wobei insbesondere eine Zugfeder, eine Druckfeder, ein Druckgummi oder ein Dämpfer vorgesehen ist.

8. Kupplung nach einem der Ansprüche 2 bis 7, **dadurch gekennzeichnet, dass** das Lager (13) zwischen einem Rampenring (11) der Vorkupplung (3) und einem Rampenring (21) der Hauptkupplung (4) angeordnet ist, und dass das Lager (13) Mittel zum Erzeugen einer Grundreibung aufweist, insbesondere eine Reibscheibe (65) und ein Federmittel (39) zur Einstellung der Reibung.

9. Kupplung nach Anspruch 8, **dadurch gekennzeichnet, dass** das Lager (13) als Wälzlager mit einer Außenlagerschale (34), Lagerstiften (36) und mit einer Innenlagerschale (35) ausgebildet ist, wobei die Mittel (65, 37) in Wirkverbindung mit der Außen- und/oder der Innenlagerschale (34, 35) stehen.

10. Kupplung nach einem der Ansprüche 7 bis 9, **dadurch gekennzeichnet, dass** der Rampenring (11) der Vorkupplung (3) und/oder der Rampenring (21) der Hauptkupplung (4) Rampenflächen (5) aufweisen, die in der Weise ausgebildet sind, dass für einen Schubfall und einen Zugfall unterschiedlich geneigte Rampenflächen (5) wirken, wobei insbesondere im Zugfall Abschnitte (A, B) mit unterschiedlichen Neigungen wirken.

11. Kupplung nach Anspruch 10, **dadurch gekennzeichnet, dass** der Übergang zwischen den Abschnitten (A, B) der verschiedenen Neigungen der Rampenflächen (5) abgerundet ist.

12. Kupplung nach einem der Ansprüche 7 bis 11, **dadurch gekennzeichnet, dass** ein zweites Federelement (47) zwischen dem Rampenring (21) der Hauptkupplung (4) und dem Rampenring (11) der Vorkupplung (3) angeordnet ist.

13. Kupplung nach einem der Ansprüche 7 bis 12, **dadurch gekennzeichnet, dass** ein Federmittel (44) und/oder ein Dämpfungsmittel (45) zwischen dem Rampenring (21) der Hauptkupplung (4) und einem Kupplungskorb (16) der Hauptkupplung angeordnet ist.

14. Kupplung nach einem der Ansprüche 8 bis 13, **dadurch gekennzeichnet, dass** die Mittel zur Erzeugung der Grundreibung im Lager in der Weise ausgebildet sind, dass die Grundreibung mit Zunahme der Verdrehung zwischen Vorkupplung (3) und Hauptkupplung (4) geringer wird.

15. Kupplung mit einer Vorkupplung (3) und einer Hauptkupplung (4), insbesondere nach Anspruch 1, mit einem Lager (13), wobei das Lager (13) Mittel für eine einstellbare Reibung zwischen der Hauptkupplung (4) und der Vorkupplung (3) aufweist.

## Claims

1. Clutch (1) having a pre-clutch (3) and having a main clutch (4), the pre-clutch (3)
- being capable of being brought into a closed or an open state via a stressing means (10);
- being connected via an operative connection (12) to the main clutch (4) in such a way that the open position and the closed position are transmitted to the main clutch (4), the clamping means (10)
- being operatively connected in a middle region with a disc (6) of the mating disc (7) of the pre-clutch (3);
- having a bearing region (102) for the actuating element in an inner region;
**characterized in that** the stressing means (10) is operatively connected by way of an outer region with a clutch core (8) of the pre-clutch (3), which clutch core (8) can be connected to a transmission input shaft.

2. Clutch according to Claim 1, **characterized in that** a clutch basket (5) of the pre-clutch (3) is mounted rotatably via a bearing (13) on the clutch core (8) of the pre-clutch (3).

3. Clutch according to either of Claims 1 and 2, **characterized in that** the main clutch (4) is operatively connected to the pre-clutch (3) via a torque sensor (23), in particular via a spring means.

4. Clutch according to Claim 1, **characterized in that** a clutch basket (5) of the pre-clutch (3) is mounted rotatably via a bearing (13) on a clutch basket (16) of the main clutch (4).

5. Clutch according to one of Claims 1 to 4, **characterized in that** the pre-clutch (3) has a disc (6) which is hooked in a clutch basket (5) of the pre-clutch (3), **in that** the pre-clutch (3) has a mating disc (7) which is hooked in a clutch core (8) of the pre-clutch (3), and **in that** a prestressing spring (40) is provided which prestresses the disc (6) and the mating disc (7) in the direction of the stressing means (10).

6. Clutch according to one of Claims 1 to 5, **characterized in that** the main clutch (4) has a disc (17) and a mating disc (18) which can be brought into frictional connection by a cover (21), and **in that** a second prestressing spring (42) is provided which prestresses the disc (17) and the mating disc (18) in the direction of the cover (21).

7. Clutch according to one of Claims 1 to 6, **characterized in that** the operative connection between the pre-clutch (3) and the main clutch (4) is provided in the form of a ramp ring (11) of the pre-clutch (3), which ramp ring (11) is operatively connected via a transmission element (22) to a ramp ring (21) of the main clutch (4), with the result that a rotation of the main clutch (4) with respect to the pre-clutch (3) is converted into an axial displacement of the ramp ring (21) of the main clutch (4), **in that** means (32, 44, 45, 39, 65) are provided which improve the operative connection between the ramp ring (21) of the main clutch (4) and the ramp ring (11) of the pre-crutch (3), a tension spring, a compression spring, a compressive rubber device or a damper being provided, in particular.

8. Clutch according to one of Claims 2 to 7, **characterized in that** the bearing (13) is arranged between a ramp ring (11) of the pre-clutch (3) and a ramp ring (21) of the main clutch (4), and **in that** the bearing (13) has means for generating a base friction, in particular a friction disc (65) and a spring means (39) for setting the friction.

9. Clutch according to Claim 8, **characterized in that** the bearing (13) is configured as an anti-friction bearing with an outer bearing shell (34), bearing pins (36) and with an inner bearing shell (35), the means (65, 37) being operatively connected to the outer and/or the inner bearing shell (34, 35).

10. Clutch according to one of Claims 7 to 9, **characterized in that** the ramp ring (11) of the pre-clutch (3) and/or the ramp ring (21) of the main clutch (4) have/has ramp faces (5) which are configured in such a way that differently inclined ramp faces (5) act for an overrun case and a traction case, sections (A, B) with different inclinations acting, in particular, in the traction case.

11. Clutch according to Claim 10, **characterized in that** the transition between the sections (A, B) of the different inclinations of the ramp faces (5) is rounded.

12. Clutch according to one of Claims 7 to 11, **characterized in that** a second spring element (47) is arranged between the ramp ring (21) of the main clutch (4) and the ramp ring (11) of the pre-clutch (3).

13. Clutch according to one of Claims 7 to 12, **characterized in that** a spring means (44) and/or a damping means (45) are/is arranged between the ramp ring (21) of the main clutch (4) and a clutch basket (16) of the main clutch.

14. Clutch according to one of Claims 8 to 13, **characterized in that** the means for generating the base friction in the bearing are configured in such a way that the base friction becomes smaller as the rotation increases between the pre-clutch (3) and the main clutch (4).

15. Clutch having a pre-clutch (3) and a main clutch (4), in particular according to Claim 1, having a bearing (13), the bearing (13) having means for an adjustable friction between the main clutch (4) and the pre-clutch (3).

## Revendications

1. Embrayage (1) comprenant un pré-embrayage (3) et un embrayage principal (4), le pré-embrayage (3)
- pouvant être amené par le biais d'un moyen de serrage (10) dans un état fermé ou un état ouvert ;
- étant connecté par le biais d'une liaison fonctionnelle (12) à l'embrayage principal (4) de telle sorte que la position ouverte et la position fermée soient transmises à l'embrayage principal (4), le moyen de serrage (10)
- étant, dans une région centrale, en liaison fonctionnelle avec un disque (6) des disques conjugués (7) du pré-embrayage (3) ;
- présentant dans une région située à l'intérieur une région d'appui (102) pour l'élément d'actionnement ;
**caractérisé en ce que** le moyen de serrage (10) est en liaison fonctionnelle par une région extérieure avec un noyau d'embrayage (8) du pré-embrayage (3) pouvant être connecté à un arbre d'entrée de boîte de vitesses.

2. Embrayage selon la revendication 1, **caractérisé en ce qu'**une cloche d'embrayage (5) du pré-embrayage (3) est montée par le biais d'un palier (13) de manière rotative sur le noyau d'embrayage (8) du pré-embrayage (3).

3. Embrayage selon l'une quelconque des revendications 1 ou 2, **caractérisé en ce que** l'embrayage principal (4) est en liaison fonctionnelle par le biais d'un palpeur de couple (23), notamment par le biais d'un moyen de ressort, avec le pré-embrayage (3).

4. Embrayage selon la revendication 1, **caractérisé en ce qu'**une cloche d'embrayage (5) du pré-embrayage (3) est montée par le biais d'un palier (13) de manière rotative sur une cloche d'embrayage (16) de l'embrayage principal (4).

5. Embrayage selon l'une quelconque des revendications 1 à 4, **caractérisé en ce que** le pré-embrayage (3) présente un disque (6) qui est accroché dans une cloche d'embrayage (5) du pré-embrayage (3), **en ce que** le pré-embrayage (3) présente un disque conjugué (7) qui est accroché dans un noyau d'embrayage (8) du pré-embrayage (3), et **en ce qu'**il est prévu un ressort de précontrainte (40) qui précontraint le disque (6) et le disque conjugué (7) dans la direction du moyen de serrage (10).

6. Embrayage selon l'une quelconque des revendications 1 à 5, **caractérisé en ce que** l'embrayage principal (4) présente un disque (17) et un disque conjugué (18) qui peuvent être amenés en engagement de friction par un couvercle (21), et **en ce qu'**il est prévu un deuxième ressort de précontrainte (42) qui précontraint le disque (17) et le disque conjugué (18) dans la direction du couvercle (21).

7. Embrayage selon l'une quelconque des revendications 1 à 6, **caractérisé en ce que** la liaison fonctionnelle entre le pré-embrayage (3) et l'embrayage principal (4) est prévue sous la forme d'une bague à rampe (11) du pré-embrayage (3), qui est en liaison fonctionnelle par le biais d'un élément de transfert (22) avec une bague à rampe (21) de l'embrayage principal (4), de telle sorte qu'une rotation de l'embrayage principal (4) par rapport au pré-embrayage (3) soit convertie en un coulissement axial de la bague à rampe (21) de l'embrayage principal (4), **en ce que** des moyens (32, 44, 45, 39, 65) sont prévus, lesquels améliorent la liaison fonctionnelle entre la bague à rampe (21) de l'embrayage principal (4) et la bague à rampe (11) du pré-embrayage (3), un ressort de traction, un ressort de compression, un caoutchouc de pression ou un amortisseur étant notamment prévus.

8. Embrayage selon l'une quelconque des revendications 2 à 7, **caractérisé en ce que** le palier (13) est disposé entre une bague à rampe (11) du pré-embrayage (3) et une bague à rampe (21) de l'embrayage principal (4), et **en ce que** le palier (13) présente des moyens pour générer un frottement de base, notamment un disque de friction (65) et un moyen de ressort (39) pour ajuster le frottement.

9. Embrayage selon la revendication 8, **caractérisé en ce que** le palier (13) est réalisé sous forme de palier à roulement avec une coque de palier extérieure (34), des goupilles de palier (36) et une coque de palier intérieure (35), les moyens (65, 37) étant en liaison fonctionnelle avec la coque de palier extérieure et/ou la coque de palier intérieure (34, 35).

10. Embrayage selon l'une quelconque des revendications 7 à 9, **caractérisé en ce que** la bague à rampe (11) du pré-embrayage (3) et/ou la bague à rampe (21) de l'embrayage principal (4) présentent des surfaces de rampe (5) qui sont réalisées de telle sorte que des surfaces de rampe (5) inclinées différemment agissent dans le cas d'une poussée et dans le cas d'une traction, des portions (A, B) ayant des inclinaisons différentes agissant notamment dans le cas d'une traction.

11. Embrayage selon la revendication 10, **caractérisé en ce que** la transition entre les portions (A, B) des différentes inclinaisons des surfaces de rampe (5) est arrondie.

12. Embrayage selon l'une quelconque des revendications 7 à 11, **caractérisé en ce qu'**un deuxième élément de ressort (47) est disposé entre la bague à rampe (21) de l'embrayage principal (4) et la bague à rampe (11) du pré-embrayage (3).

13. Embrayage selon l'une quelconque des revendications 7 à 12, **caractérisé en ce qu'**un moyen de ressort (44) et/ou un moyen d'amortissement (45) est disposé entre la bague à rampe (21) de l'embrayage principal (4) et une cloche d'embrayage (16) de l'embrayage principal.

14. Embrayage selon l'une quelconque des revendications 8 à 13, **caractérisé en ce que** les moyens pour générer le frottement de base dans le palier sont réalisés de telle sorte que le frottement de base diminue au fur et à mesure de l'augmentation de la rotation entre le pré-embrayage (3) et l'embrayage principal (4).

15. Embrayage comprenant un pré-embrayage (3) et un embrayage principal (4), en particulier selon la revendication 1, comprenant un palier (13), le palier (13) présentant des moyens pour un frottement ajustable entre l'embrayage principal (4) et le pré-embrayage (3).
